# EUROPEAN PATENT APPLICATION

(11) **EP 3 125 488 A1**
(43) Date of publication of application: **01.02.2017**
(21) Application number: 14889386.0
(22) Date of filing: 15.04.2014
(51) Int. Cl.: H04L 29/06

(54) **DATA TRANSMISSION METHOD, TRANSMITTING TERMINAL DEVICE, AND RECEIVING TERMINAL DEVICE**

(71) Applicant: Huawei Technologies Co., Ltd., Shenzhen, Guangdong 518129 (CN)
(72) Inventor: MA, Jie, Shenzhen Guangdong 518129 (CN); CAO, Zhenzhen, Shenzhen Guangdong 518129 (CN)
(74) Representative: Thun, Clemens
(86) International application number: PCT/CN2014/075400
(87) International publication number: WO 2015/157912

(57) **Abstract**

Embodiments of the present invention provide a data transmission method, a transmitting device, and a receiving device. The method includes: setting, by a transmitting device, a sending manner of a media access control layer service data unit MAC SDU according to a logical channel type of the MAC SDU; and sending, by the transmitting device according to the sending manner, a media access control layer protocol data unit MAC PDU obtained from the MAC SDU. If multiple transmitting devices simultaneously send MAC PDUs to the receiving device, the receiving device caches, to cache entities corresponding to the different transmitting devices, the MAC PDUs sent by the transmitting devices and processes the MAC PDUs. In this process, the receiving device can simultaneously process MAC SDUs sent by multiple transmitting devices, thereby improving data transmission reliability in D2D communication.

## Description

### TECHNICAL FIELD

Embodiments of the present invention relate to wireless communications technologies, and in particular, to a data transmission method, a transmitting device, and a receiving device.

### BACKGROUND

Currently, in a cellular mobile communications system, a traditional communication manner is mostly used for communication between two mobile terminals. In this manner, two terminals that need to communicate with each other communicate by means of forwarding by a base station. After a public safety event such as a fire occurs, a rescue squad communicates with a command team in a specific area, and a large quantity of video streams and the like need to be transmitted between mobile terminals of different groups. To avoid a rescue failure caused by congestion of the base station, a communications terminal device-to-device (device to device, D2D) technology is introduced.

In the D2D technology, when a distance between two mobile terminals falls within a specific range, the two mobile terminals can directly communicate and do not need to communicate by means of uplink and downlink forwarding by a base station. Specifically, similar to a process of sending data to a mobile terminal by a base station in the traditional communication manner, in a device-to-device communication manner, a sender device directly sends to-be-sent data to a receiver device.

However, in the device-to-device manner, a scenario in which multiple senders simultaneously send data to one receiver may exist. For example, members of the rescue squad simultaneously send data to one member of the command team. In this case, because a media access control (Radio Link Control, MAC) layer of a mobile terminal can process data from only one transmitting device, data transmission fails.

### SUMMARY

Embodiments of the present invention provide a data transmission method, a transmitting device, and a receiving device. A MAC layer structure in which data of multiple transmitting devices can be simultaneously processed is proposed, so that data transmission reliability is improved.

According to a first aspect, an embodiment of the present invention provides a data transmission method, including:
setting, by a transmitting device, a sending manner of a media access control layer service data unit MAC SDU according to a logical channel type of the MAC SDU; and
sending, by the transmitting device according to the sending manner, a media access control layer protocol data unit MAC PDU obtained from the MAC SDU.

In a first possible implementation manner of the first aspect, the setting, by a transmitting device, a sending manner of a MAC SDU according to a logical channel type of the MAC SDU includes:
if the logical channel type of the MAC SDU is a broadcast type, adding a broadcast mode indicator bit to a packet header of the MAC PDU, so as to set the sending manner of the MAC SDU to a broadcast sending manner.

In a second possible implementation manner of the first aspect, the setting, by a transmitting device, a sending manner of a MAC SDU according to a logical channel type of the MAC SDU includes:
if the logical channel type of the MAC SDU is a unicast type, adding a unicast mode indicator bit, an identifier of the transmitting device, and a unicast destination address to a packet header of the MAC PDU, so as to set the sending manner of the MAC SDU to a unicast sending manner.

In a third possible implementation manner of the first aspect, the setting, by a transmitting device, a sending manner of a MAC SDU according to a logical channel type of the MAC SDU includes:
if the logical channel type of the MAC SDU is a multicast type, adding a multicast mode indicator bit, an identifier of the transmitting device, and a multicast destination address to a packet header of the MAC PDU, so as to set the sending manner of the MAC SDU to a multicast sending manner.

With reference to the first aspect, or the first, the second, or the third possible implementation manner of the first aspect, in a fourth possible implementation manner of the first aspect, if the MAC SDU is obtained by segmenting a radio link control layer protocol data unit RLC PDU of the transmitting device, the method further includes:
adding, by the transmitting device, a segmentation bit, a serial number bit, or a concatenation bit to the packet header of the MAC PDU, where the segmentation bit indicates that the MAC SDU is obtained by segmenting the RLC PDU, the serial number bit indicates a location of the MAC SDU in the RLC PDU, and the concatenation bit indicates whether there is still another MAC SDU after the MAC SDU.

With reference to the first aspect, or the first, the second, the third, or the fourth possible implementation manner of the first aspect, in a fifth possible implementation manner of the first aspect, the packet header of the MAC PDU further carries a logical channel identifier.

According to a second aspect, an embodiment of the present invention provides a data transmission method, including:
receiving, by a receiving device, a media access control layer protocol data unit MAC PDU sent by a transmitting device, where the MAC PDU is sent in a sending manner that is set by the transmitting device according to a logical channel type of a media access control layer service data unit MAC SDU;
sending, by the receiving device, the MAC PDU to a cache entity corresponding to the transmitting device; and
sending, by the receiving device, the MAC SDU included in the MAC PDU in the cache entity to a radio link control RLC layer.

In a first possible implementation manner of the second aspect, the receiving, by a receiving device, a MAC PDU sent by a transmitting device includes:
receiving, by the receiving device, the MAC PDU sent by the transmitting device in a broadcast sending manner.

In a second possible implementation manner of the second aspect, the receiving, by a receiving device, a MAC PDU sent by a transmitting device includes:
receiving, by the receiving device, the MAC PDU sent by the transmitting device in a unicast sending manner, where a packet header of the MAC PDU carries a unicast mode indicator bit, an identifier of the transmitting device, and a unicast destination address; and
the sending, by the receiving device, the MAC SDU included in the MAC PDU in the cache entity to an RLC layer includes:
determining, by the receiving device, whether the unicast destination address is consistent with an identifier of the receiving device, and if the unicast destination address is consistent with the identifier of the receiving device, sending the MAC SDU included in the MAC PDU to the RLC layer.

In a third possible implementation manner of the second aspect, the receiving, by a receiving device, a MAC PDU sent by a transmitting device includes:
receiving, by the receiving device, the MAC PDU sent by the transmitting device in a multicast sending manner, where a packet header of the MAC PDU carries a multicast mode indicator bit, an identifier of the transmitting device, and a multicast destination address; and
the sending, by the receiving device, the MAC SDU included in the MAC PDU in the cache entity to an RLC layer includes:
determining, by the receiving device, whether the multicast destination address is consistent with a group identifier of the receiving device, and if the multicast destination address is consistent with the group identifier of the receiving device, sending, to the RLC layer, the MAC SDU corresponding to the MAC PDU.

With reference to the second aspect, or the first, the second, or the third possible implementation manner of the second aspect, in a fourth possible implementation manner of the second aspect, if the MAC PDU is obtained by segmenting a radio link control layer protocol data unit RLC PDU of the transmitting device, the receiving, by a receiving device, a MAC PDU sent by a transmitting device includes:
receiving, by the receiving device, the MAC PDU, where a segmentation bit, a serial number bit, or a concatenation bit is added to the packet header of the MAC PDU, the segmentation bit indicates that the MAC SDU is obtained by segmenting the RLC PDU, the serial number bit indicates a location of the MAC SDU in the RLC PDU, and the concatenation bit indicates whether there is still another MAC SDU after the MAC SDU; and
before the sending, by the receiving device, the MAC SDU included in the MAC PDU in the cache entity to an RLC layer, the method includes:
   sorting, by the receiving device according to the serial number bit, MAC SDUs that are obtained by segmenting a same RLC PDU and included in MAC PDUs, and sending the sorted MAC SDUs to the RLC layer.

With reference to the second aspect, or the first, the second, the third, or the fourth possible implementation manner of the second aspect, in a fifth possible implementation manner of the second aspect, the sending, by the receiving device, the MAC SDU included in the MAC PDU in the cache entity to an RLC layer includes:
sending, by the receiving device according to a logical channel identifier carried in the packet header of the MAC PDU, the MAC SDU included in the MAC PDU to a logical channel that is corresponding to the logical channel identifier and that is at the RLC layer.

According to a third aspect, an embodiment of the present invention provides a transmitting device, including:
a setting module, configured to set a sending manner of a media access control layer service data unit MAC SDU according to a logical channel type of the MAC SDU; and
a sending module, configured to send, according to the sending manner that is set by the setting module, a media access control layer protocol data unit MAC PDU obtained from the MAC SDU.

In a first possible implementation manner of the third aspect, the setting module is specifically configured to: if the logical channel type of the MAC SDU is a broadcast type, add a broadcast mode indicator bit to a packet header of the MAC PDU, so as to set the sending manner of the MAC SDU to a broadcast sending manner.

In a second possible implementation manner of the third aspect, the setting module is specifically configured to: if the logical channel type of the MAC SDU is a unicast type, add a unicast mode indicator bit, an identifier of the transmitting device, and a unicast destination address to a packet header of the MAC PDU, so as to set the sending manner of the MAC SDU to a unicast sending manner.

In a third possible implementation manner of the third aspect, the setting module is specifically configured to: if the logical channel type of the MAC SDU is a multicast type, add a multicast mode indicator bit, an identifier of the transmitting device, and a multicast destination address to a packet header of the MAC PDU, so as to set the sending manner of the MAC SDU to a multicast sending manner.

With reference to the third aspect, or the first, the second, or the third possible implementation manner of the third aspect, in a fourth possible implementation manner of the third aspect, the transmitting device further includes:
an adding module, configured to: if the MAC SDU is obtained by segmenting a radio link control layer protocol data unit RLC PDU of the transmitting device, add a segmentation bit, a serial number bit, or a concatenation bit to the packet header of the MAC PDU, where the segmentation bit indicates that the MAC SDU is obtained by segmenting the RLC PDU, the serial number bit indicates a location of the MAC SDU in the RLC PDU, and the concatenation bit indicates whether there is still another MAC SDU after the MAC SDU.

With reference to the third aspect, or the first, the second, the third, or the fourth possible implementation manner of the third aspect, in a fifth possible implementation manner of the third aspect, the packet header of the MAC PDU further carries a logical channel identifier.

According to a fourth aspect, an embodiment of the present invention provides a receiving device, including:
a receiving module, configured to receive a media access control layer protocol data unit MAC PDU sent by a transmitting device, where the MAC PDU is sent in a sending manner that is set by the transmitting device according to a logical channel type of a media access control layer service data unit MAC SDU;
a sending module, configured to: send the MAC PDU received by the receiving module to a cache entity corresponding to the transmitting device, and then send the MAC SDU included in the MAC PDU in the cache entity to a radio link control RLC layer.

In a first possible implementation manner of the fourth aspect, the receiving module is specifically configured to receive the MAC PDU sent by the transmitting device in a broadcast sending manner.

In a second possible implementation manner of the fourth aspect, the receiving device further includes: a determining module; where
the receiving module is specifically configured to receive the MAC PDU sent by the transmitting device in a unicast sending manner, where a packet header of the MAC PDU carries a unicast mode indicator bit, an identifier of the transmitting device, and a unicast destination address;
the determining module is configured to determine whether the unicast destination address is consistent with an identifier of the receiving device; and
the sending module is specifically configured to: if the determining module determines that the unicast destination address is consistent with the identifier of the receiving device, send the MAC SDU included in the MAC PDU to the RLC layer.

In a third possible implementation manner of the fourth aspect, the receiving device further includes: a determining module; where
the receiving module is specifically configured to receive the MAC PDU sent by the transmitting device in a multicast sending manner, where a packet header of the MAC PDU carries a multicast mode indicator bit, an identifier of the transmitting device, and a multicast destination address;
the determining module is configured to determine whether the multicast destination address is consistent with a group identifier of the receiving device; and
the sending module is specifically configured to: if the determining module determines that the multicast destination address is consistent with the group identifier of the receiving device, send the MAC SDU included in the MAC PDU to the RLC layer.

With reference to the fourth aspect, or the first, the second, or the third possible implementation manner of the fourth aspect, in a fourth possible implementation manner of the fourth aspect, the receiving device further includes: a sorting module; where
the receiving module is specifically configured to receive the MAC PDU, where a segmentation bit, serial number bit, or a concatenation bit is added to the packet header of the MAC PDU, the segmentation bit indicates that the MAC SDU is obtained by segmenting the RLC PDU, the serial number bit indicates a location of the MAC SDU in the RLC PDU, and the concatenation bit indicates whether there is still another MAC SDU after the MAC SDU;
the sorting module is configured to sort, according to the serial number bit, MAC SDUs that are obtained by segmenting a same RLC PDU and included in MAC PDUs; and
the sending module is specifically configured to send the MAC SDUs sorted by the sorting module to the RLC layer.

With reference to the fourth aspect, or the first, the second, the third, or the fourth possible implementation manner of the fourth aspect, in a fifth possible implementation manner of the fourth aspect, the sending module is specifically configured to send, according to a logical channel identifier carried in the packet header of the MAC PDU, the MAC SDU included in the MAC PDU to a logical channel that is corresponding to the logical channel identifier and that is at the RLC layer.

According to a fifth aspect, an embodiment of the present invention provides a transmitting device, including a processor and a memory, where the memory stores an execution instruction, and when the transmitting device runs, the processor communicates with the memory, and the processor executes the execution instruction, so that the transmitting device performs the method according to the first aspect or any one of the first to the fifth possible implementation manners of the first aspect.

According to a sixth aspect, an embodiment of the present invention provides a receiving device, including a processor and a memory, where the memory stores an execution instruction, and when the receiving device runs, the processor communicates with the memory, and the processor executes the execution instruction, so that the receiving device performs the method according to the second aspect or any one of the first to the fifth possible implementation manners of the second aspect.

The embodiments of the present invention provide the data transmission method, the transmitting device, and the receiving device. The transmitting device sets a sending manner of a MAC SDU according to a logical channel type of the MAC SDU and sends the MAC SDU according to the sending manner, so that the receiving device caches and processes the MAC SDU. If multiple transmitting devices simultaneously send MAC PDUs to the receiving device, the receiving device caches, to cache entities corresponding to the different transmitting devices, the MAC PDUs sent by the transmitting devices and processes the MAC PDUs. In this process, the receiving device can simultaneously process MAC SDUs sent by multiple transmitting devices, thereby improving data transmission reliability in D2D communication.

### BRIEF DESCRIPTION OF DRAWINGS

FIG. 1 is a schematic diagram of a user plane protocol stack in a data transmission method according to the present invention;
FIG. 2 is a flowchart of Embodiment 1 of a data transmission method according to the present invention;
FIG. 3 is a schematic structural diagram of a MAC entity of a transmitting device according to the present invention;
FIG. 4 is a flowchart of a sending manner setting and address adding process in a data transmission method according to the present invention;
FIG. 5 is a flowchart of Embodiment 2 of a data transmission method according to the present invention;
FIG. 6 is a schematic structural diagram of a MAC entity of a receiving device according to the present invention;
FIG. 7A is a schematic format diagram of a packet header of a MAC PDU sent in a broadcast manner in a data transmission method according to the present invention;
FIG. 7B is a schematic format diagram of a packet header of a MAC PDU sent in a unicast manner in a data transmission method according to the present invention;
FIG. 7C is a schematic format diagram of a packet header of a MAC PDU sent in a multicast manner in a data transmission method according to the present invention;
FIG. 8 is a schematic structural diagram of a MAC-U entity in a data transmission method according to the present invention;
FIG. 9 is a schematic structural diagram of a MAC-GU entity in a data transmission method according to the present invention;
FIG. 10 is another schematic structural diagram of a MAC-U entity in a data transmission method according to the present invention;
FIG. 11 is a schematic format diagram of a packet header, to which a serial number bit is added, of a MAC PDU in a data transmission method according to the present invention;
FIG. 12A is a schematic format diagram of a common packet header and a sub-packet header in a data transmission method according to the present invention;
FIG. 12B is a schematic format diagram of another common packet header and another sub-packet header in a data transmission method according to the present invention;
FIG. 13A is a schematic format diagram of a data packet obtained after a MAC PDU sent in a broadcast manner is demultiplexed in a data transmission method according to the present invention;
FIG. 13B is a schematic format diagram of a data packet obtained after a MAC PDU sent in a unicast manner is demultiplexed in a data transmission method according to the present invention;
FIG. 13C is a schematic format diagram of a data packet obtained after a MAC PDU sent in a multicast manner is demultiplexed in a data transmission method according to the present invention;
FIG. 14 is a schematic structural diagram of Embodiment 1 of a transmitting device according to the present invention;
FIG. 15 is a schematic structural diagram of Embodiment 2 of a transmitting device according to the present invention;
FIG. 16 is a schematic structural diagram of Embodiment 1 of a receiving device according to the present invention;
FIG. 17 is a schematic structural diagram of Embodiment 2 of a receiving device according to the present invention;
FIG. 18 is a schematic structural diagram of Embodiment 3 of a transmitting device according to the present invention; and
FIG. 19 is a schematic structural diagram of Embodiment 3 of a receiving device according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

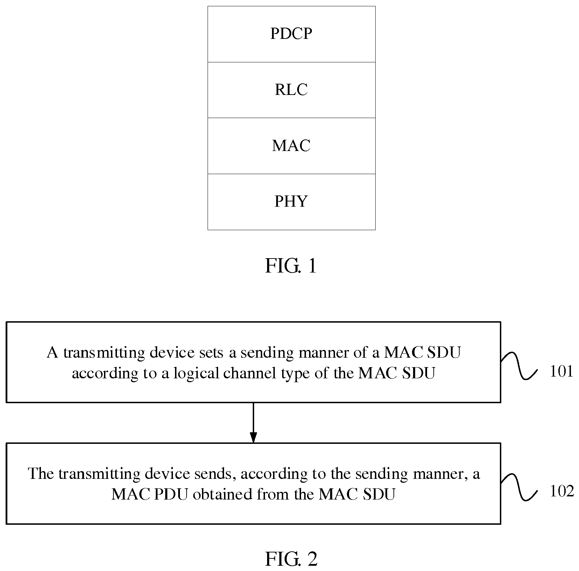

In the embodiments of the present invention, a mobile terminal is a cellular device-to-device terminal that can perform both traditional cellular communication and terminal device-to-device communication. In the following, for clarity of description, a cellular device-to-device terminal that sends data is referred to as a transmitting device, and a cellular device-to-device terminal that receives data is referred to as a receiving device. In a D2D communication process, a user plane protocol stack of the transmitting device and the receiving device is shown in FIG. 1. FIG. 1 is a schematic diagram of a user plane protocol stack in a data transmission method according to the present invention. As shown in FIG. 1, the user plane protocol stack includes a packet data convergence protocol (Packet Data Convergence Protocol, PDCP) layer, a radio link control (Radio Link Control, RLC) layer, a media access control (Radio Link Control, MAC) layer, and a physical (PHY) layer in order from top to bottom. The data transmission method according to the present invention is described in detail in the following according to this user plane protocol stack.

FIG. 2 is a flowchart of Embodiment 1 of a data transmission method according to the present invention. This embodiment is executed by a transmitting device, and is applicable to a scenario in which multiple transmitting devices simultaneously send data to one receiving device in device-to-device communication. Specifically, this embodiment includes the following steps:
101. The transmitting device sets a sending manner of a media access control layer service data unit MAC SDU according to a logical channel type of the MAC SDU.

Generally, each mobile terminal has a MAC entity. A MAC entity of the transmitting device can implement mapping of a logical channel to a transport channel, and after being mapped, each transport channel is corresponding to a different logical channel. The logical channel (Logical Channel, LCH) is obtained by classifying data flows of different services, so as to distinguish the data flows, and includes a broadcast control channel (Broadcast Control Channel, BCCH), a physical control channel (Physical Control Channel, PCCH), a multicast control channel (Multicast Control Channel, MCCH), a multicast traffic channel (Multicast Traffic Channel, MTCH), a common control channel (Common Control Channel, CCCH), a dedicated control channel (Dedicated Control Channel, DCCH), and the like. The transport channel includes a broadcast channel (Broadcast Channel, BCH), a downlink shared channel (Downlink Shared Channel, DL-SCH), a paging channel (Paging Channel, PCH), an uplink shared channel (Uplink Shared Channel, UL-SCH), a random access channel (Random Access Channel, RACH), a multicast channel (Multicast Channel, MCH), and the like. After being mapped, the PCCH is corresponding to the PCH, and the MCCH and the MTCH are corresponding to the MCH.

In this step, the transmitting device may classify LCHs into different types in advance according to sending manners of the LCHs. For example, the BCCH and the PCCH are sent in a broadcast manner and are classified into a broadcast type; the MCCH and the MTCH are sent in a multicast manner and are classified into a multicast type; the CCCH and the DCCH are sent in a unicast manner and are classified into a unicast type. Then, the sending manner of the MAC SDU is set according to the logical channel type of the MAC SDU. For example, if the MAC SDU is data of the BCCH or the PCCH, the sending manner of the MAC SDU is set to broadcast; if the MAC SDU is data of the MCCH or the MTCH, the sending manner of the MAC SDU is set to multicast; if the MAC SDU is data of the CCCH or the DCCH, the sending manner of the MAC SDU is set to unicast.
102. The transmitting device sends, according to the sending manner, a media access control layer protocol data unit MAC PDU obtained from the MAC SDU.

At a transmit end, each layer receives an SDU from a higher layer and outputs a PDU to an underlying layer. Therefore, in this step, after setting the sending manner of the MAC SDU according to the logical channel type, the transmitting device sends, according to the sending manner, the MAC PDU obtained from the MAC SDU, so that a receiving device caches and processes the MAC PDU. In this process, if multiple transmitting devices simultaneously send MAC PDUs to the receiving device, the receiving device caches, to cache entities corresponding to the different transmitting devices, the MAC PDUs sent by the transmitting devices and processes the MAC PDUs.

In the data transmission method provided in this embodiment of the present invention, a transmitting device sets a sending manner of a MAC SDU according to a logical channel type of the MAC SDU and sends the MAC SDU according to the sending manner, so that a receiving device caches and processes the MAC SDU. If multiple transmitting devices simultaneously send MAC PDUs to the receiving device, the receiving device caches, to cache entities corresponding to the different transmitting devices, the MAC PDUs sent by the transmitting devices and processes the MAC PDUs. In this process, the receiving device can simultaneously process MAC SDUs sent by multiple transmitting devices, thereby improving data transmission reliability in D2D communication.

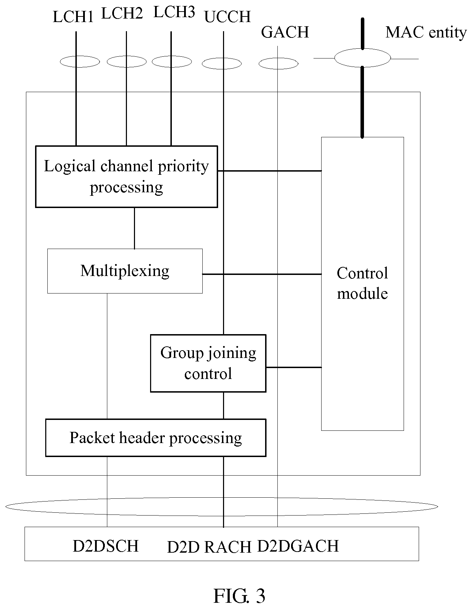

In the D2D communication, a MAC layer entity processes data at a PHY layer and sends the processed data to an RLC layer, and each service data flow is encapsulated into a data packet at the RLC layer and is transmitted reliably. An RLC layer entity is corresponding to a logical channel, and the MAC layer processes the data at the PHY layer into a transport channel for transmitting data. Therefore, a MAC entity of the transmitting device needs to have a function of mapping a logical channel at an RLC layer into a transport channel, and a function of multiplexing multiple logical channels into one transport channel, to utilize an air interface resource to the fullest. Specifically, referring to FIG. 3, FIG. 3 is a schematic structural diagram of a MAC entity of a transmitting device according to the present invention.

As shown in FIG. 3, the MAC entity of the transmitting device has a control module, and implements a logical channel priority processing function, a multiplexing function, packet header processing, group joining control, and the like by using the control module. These functions are described in detail in the following with reference to FIG. 3.

As shown in FIG. 3, MAC SDUs of an LCH1, an LCH2, and an LCH3 are mapped to a D2D SCH after logical channel priority processing, multiplexing, and packet header processing; an uplink control channel (Uplink Control Channel, UCCH) is a logical channel by using which the transmitting device joins a wireless group, and a transport channel corresponding to the uplink control channel is a D2D PRACH; a transport channel corresponding to a group announcement channel (Group Announcement channel, GACH) is a D2D GACH.

Generally, mobile terminals in a public event belong to different wireless groups, for example, may belong to a rescue squad or a command team, or belong to different rescue squads. At least one of multiple mobile terminals that belong to a same wireless group is a group head node, and remaining mobile terminals are group number nodes. Referring to FIG. 3, if the transmitting device is a group head node, an RLC layer entity of the transmitting device has a GACH logical channel. Information about the logical channel is transparently transmitted at a MAC layer to a PHY layer, and the group head node periodically sends "group announcement" information by using the GACH, so that another node within a coverage area of the group head node learns existence of the group head node and joins this group. In addition, the group head node may further schedule data sending of another group member node to better utilize limited wireless resources and avoid interference and collision. If the transmitting device is a group member node, the transmitting device may send an initial access request to a group head node by using a UCCH, so that the transmitting device becomes a member of a wireless group. It should be noted that, a mobile terminal may join at least two wireless groups, and therefore, the transmitting device may be a group head node in some wireless groups, and at the same time, the transmitting device may be a group member node in another wireless group.

In D2D communication, the transmitting device sends service data such as a video and a picture to a receiving device, and each type of service has at least one data flow. For example, a video service has two data flows: voice and a picture, and each data flow is corresponding to one logical channel (that is, one RLC instance). Therefore, when data on multiple logical channels needs to be sent, the MAC layer may transmit the data on the multiple logical channels by using radio resources if the radio resources are abundant, so that the MAC layer has the multiplexing function. Further, to ensure service quality of service data, when multiplexing multiple logical channels, the MAC layer prioritizes the logical channels, so that the MAC layer has the logical channel priority processing function.

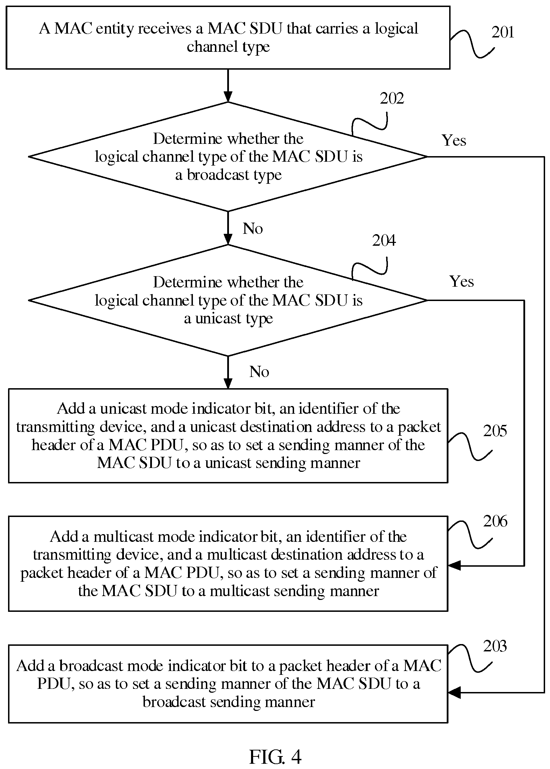

After priority processing and multiplexing are performed, data packets on the multiple logical channels enter a packet header processing stage, and logical channel types of the logical channels enter the packet header processing together with the MAC SDU. If the logical channel types are a unicast type and a multicast type, a unicast destination address and a multicast destination address also enter the packet header processing stage. Specifically, referring to FIG. 4, FIG. 4 is a flowchart of a sending manner setting and address adding process in a data transmission method according to the present invention. This embodiment is applicable to a scenario in which one MAC PDU includes only one MAC SDU, or one MAC PDU includes multiple MAC SDUs but logical channel types of the MAC SDUs are consistent and destination addresses are consistent, and this embodiment includes the following steps:
201. A MAC entity receives a MAC SDU that carries a logical channel type.
202. Determine whether the logical channel type of the MAC SDU is a broadcast type, where if yes, step 203 is performed, or otherwise, step 204 is performed.

The MAC entity may determine the logical channel type according to a configuration parameter and the like. For example, 0, 1, and 2 are respectively used to indicate a broadcast type, a unicast type, and a multicast type.
203. Add a broadcast mode indicator bit to a packet header of a MAC PDU, so as to set a sending manner of the MAC SDU to a broadcast sending manner.

At a transmit end, each layer receives an SDU from a higher layer and outputs a PDU to an underlying layer. Therefore, in this step, if the MAC entity determines that the logical channel type is the broadcast type, the broadcast mode indicator bit is added to the packet header of the MAC PDU. Because the MAC PDU is a broadcast mode, a destination address does not need to be added. After packet header processing is complete, the MAC PDU is sent to a PHY layer.
204. Determine whether the logical channel type of the MAC SDU is a unicast type, where if yes, step 205 is performed, or otherwise, step 206 is performed.
205. Add a unicast mode indicator bit, an identifier of a transmitting device, and a unicast destination address to a packet header of a MAC PDU, so as to set a sending manner of the MAC SDU to a unicast sending manner.

If the MAC entity determines that the logical channel type is the unicast type, the MAC entity adds the unicast mode indicator bit and the unicast destination address to the packet header. Specifically, there are two types of unicast destination addresses by classification: First, if a mobile terminal corresponding to the destination address and the transmitting device belong to a same wireless group, an intra-group local address may be used to describe the destination address; second, if a mobile terminal corresponding to the destination address and the transmitting device do not belong to a same wireless group, a global address needs to be added, that is, a group identifier and an intra-group address of a target mobile terminal. At a transmit end, each layer receives an SDU from a higher layer and outputs a PDU to an underlying layer. Therefore, after data packet processing is complete, the processed MAC PDU is sent to a PHY layer.
206. Add a multicast mode indicator bit, an identifier of a transmitting device, and a multicast destination address to a packet header of a MAC PDU, so as to set a sending manner of the MAC SDU to a multicast sending manner.

If the logical channel type is not the broadcast type or the unicast type but the multicast type, the multicast mode indicator bit and the multicast destination address are added to the packet header. The multicast destination address is generally considered as a group identifier. After packet header processing is complete, the processed MAC PDU is sent to a PHY layer.

It should be noted that, when one MAC PDU includes only one MAC SDU, the foregoing adding the broadcast mode indicator bit, the unicast mode indicator bit, the multicast mode indicator bit, or the like to the packet header of the MAC PDU refers to adding the broadcast mode indicator bit, the unicast mode indicator bit, the multicast mode indicator bit, or the like to the packet header of the MAC PDU; when one MAC PDU includes multiple MAC SDUs, the foregoing adding the broadcast mode indicator bit, the unicast mode indicator bit, the multicast mode indicator bit, or the like to the packet header of the MAC PDU refers to adding the broadcast mode indicator bit, the unicast mode indicator bit, the multicast mode indicator bit, or the like to a sub-packet header of the MAC PDU.

In the packet header processing stage in FIG. 4, the packet header is processed according to the logical channel type, so that multicast, unicast, and broadcast functions are implemented and overheads of the packet header are the smallest.

Optionally, in the foregoing Embodiment 1, when an RLC PDU at the RLC layer is large and needs to be divided into multiple MAC PDUs for transmission, the transmitting device further needs to add a segmentation bit, a serial number bit, or a concatenation bit to the packet header of the MAC PDU, where the segmentation bit indicates that the MAC SDU is obtained by segmenting the RLC PDU, the serial number bit indicates a location of the MAC SDU in the RLC PDU, and the concatenation bit indicates whether there is a packet header or a MAC SDU after the packet header. In this way, after receiving the MAC PDU, if a data packet of the receiving device is determined, the receiving device combines, according to an SN, MAC PDUs belonging to a same RLC PDU, to restore the RLC PDU.

Optionally, in the foregoing Embodiment 1, the packet header of the MAC PDU further carries a logical channel identifier. In this way, at a receive end, each layer receives a PDU from an underlying layer and outputs an SDU to a higher layer, and therefore, after receiving the MAC PDU, if a data packet of the receiving device is determined, the receiving device transmits a MAC SDU included in the MAC PDU to a corresponding RLC entity according to the logical channel identifier.

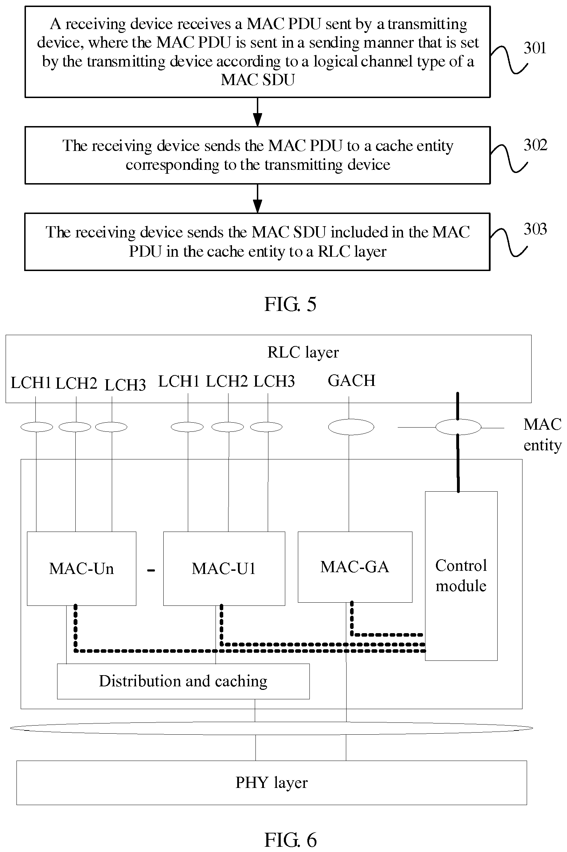

FIG. 5 is a flowchart of Embodiment 2 of a data transmission method according to the present invention. This embodiment is executed by a receiving device, and is applicable to a scenario in which multiple transmitting devices simultaneously send data to one receiving device in device-to-device communication. Specifically, this embodiment includes the following steps:
301. A receiving device receives a media access control layer protocol data unit MAC PDU sent by a transmitting device, where the MAC PDU is sent in a sending manner that is set by the transmitting device according to a logical channel type of a MAC SDU.

A physical layer of the receiving device receives the MAC PDU sent in the sending manner that is set by the transmitting device according to the logical channel type of the MAC SDU.
302. The receiving device sends the MAC PDU to a cache entity corresponding to the transmitting device.

The receiving device establishes a MAC-U entity, that is, a cache entity, for each transmitting device. After receiving the MAC PDU, the receiving device sends the MAC PDU to the corresponding cache entity. If there are multiple transmitting devices, MAC PDUs sent by the transmitting devices are sent to corresponding cache entities.
303. The receiving device sends the MAC SDU included in the MAC PDU in the cache entity to a radio link control RLC layer.

After performing processing, such as demultiplexing and packet header removing, on the MAC PDU in the cache entity, the receiving device sends the processed MAC SDU to a corresponding RLC entity according to a logical channel identifier.

In the data transmission method provided in this embodiment of the present invention, after receiving a MAC PDU sent in a sending manner that is set by a transmitting device according to a logical channel type of the MAC PDU, a receiving device caches and processes the MAC PDU. If multiple transmitting devices simultaneously send MAC PDUs to the receiving device, the receiving device caches, to cache entities corresponding to the different transmitting devices, the MAC PDUs sent by the transmitting devices and processes the MAC PDUs. In this process, the receiving device can simultaneously process MAC PDUs sent by multiple transmitting devices, thereby improving data transmission reliability in D2D communication.

FIG. 6 is a schematic structural diagram of a MAC entity of a receiving device according to the present invention. As shown in FIG. 6, the MAC entity of the receiving device has a control module, and establishes a cache entity MAC-U for each transmitting device by using the control module. In a data transmission process, after a PHY layer receives a MAC PDU sent by the transmitting device, a distribution module sends the MAC PDU to a corresponding MAC-U, and the MAC-U performs packet header processing and the like, and then sends the MAC SDU to a corresponding logical channel. The distribution module, the cache entity, and the like of the MAC entity of the receiving device are described in detail in the following with reference to FIG. 6.

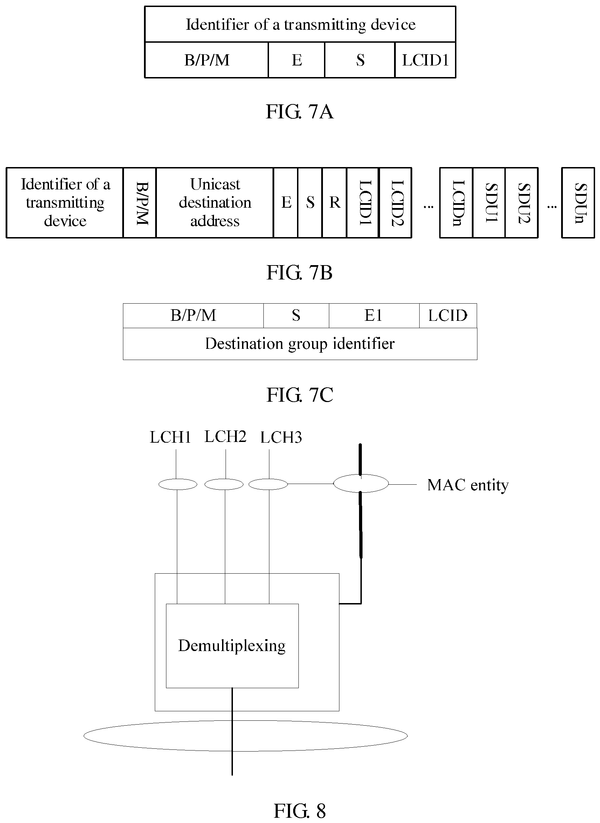

First, the distribution module is described in detail. Specifically, a packet header of the MAC PDU received by the receiving device carries an identifier of the transmitting device, a logical channel identifier, and a transmission mode indicator bit "B/P/M". B is a broadcast sending manner, indicating that the transmitting device sends, in a broadcast manner, the MAC PDU to all receiving devices that can receive a data packet of the transmitting device; P is a unicast sending manner, indicating that the transmitting device sends the MAC PDU to a particular receiver; M is a multicast sending manner, indicating that the transmitting device sends the MAC PDU to multiple receivers that have a specific feature. Therefore, the distribution module has a function of sending, to corresponding MAC-U entities according to information in the packet header of the MAC PDU, MAC PDUs sent by different transmitting devices. Specifically, reference may be made to FIG. 7A to FIG. 7C.

FIG. 7A is a schematic format diagram of a packet header of a MAC PDU sent in a broadcast manner in a data transmission method according to the present invention. As shown in FIG. 7A, when a transmission mode indicator bit "B/P/M" is B, a packet header does not include address information or an identifier of a receiver, and subsequent processing can be performed provided that data can be correctly received at a physical layer. In this case, a distribution module performs distribution according to an identifier that is of a transmitting device and that is carried in the packet header, that is, sends a data packet to a MAC-U entity corresponding to the identifier of the transmitting device.

FIG. 7B is a schematic format diagram of a packet header of a MAC PDU sent in a unicast manner in a data transmission method according to the present invention. As shown in FIG. 7B, when a transmission mode indicator bit "B/P/M" is P, a packet header needs to include address information or an identifier of a receiver. In this case, after determining that the transmission mode indicator bit is P, a distribution module continues to read the packet header, obtains a unicast destination address, and compares the unicast destination address with an identifier of the distribution module. If the two identifiers are consistent, the distribution module considers that a receiving device of the distribution module is a target receiving device, and sends a data packet to a MAC-U entity corresponding to an identifier of the transmitting device; if the two identifiers are inconsistent, the distribution module considers that a receiving device of the distribution module is not a receiver of this data packet, and the distribution module discards the data packet. It should be noted that, FIG. 7B shows a data unit in which one data packet has multiple logical channels.

FIG. 7C is a schematic format diagram of a packet header of a MAC PDU sent in a multicast manner in a data transmission method according to the present invention. As shown in FIG. 7C, when a transmission mode indicator bit "B/P/M" is M, a packet header needs to include address information or an identifier of a receiver. In this case, after determining that the transmission mode indicator bit is M, a distribution module continues to read the packet header, obtains a multicast destination address such as a destination group identifier (target group ID), and compares the group identifier with a group identifier of a group of the distribution module. If the two group identifiers are consistent, the distribution module considers that a receiving device of the distribution module is a target receiving device, and sends a data packet to a MAC-U entity corresponding to an identifier of the transmitting device; if the two group identifiers are inconsistent, the distribution module considers that a receiving device of the distribution module is not a receiver of this data packet, and the distribution module discards the data packet.

Then, the cache instance, that is, a MAC-U, is described in detail. Specifically, referring to FIG. 8, FIG. 8 is a schematic structural diagram of a MAC-U entity in a data transmission method according to the present invention. As shown in FIG. 8, a receiving device establishes a MAC-U for each transmitting device, and the MAC-U demultiplexes a data packet, removes a packet header at a MAC layer, and the like, to obtain an RLC PDU, and then sends each RLC PDU to a corresponding RLC entity according to a logical channel identifier.

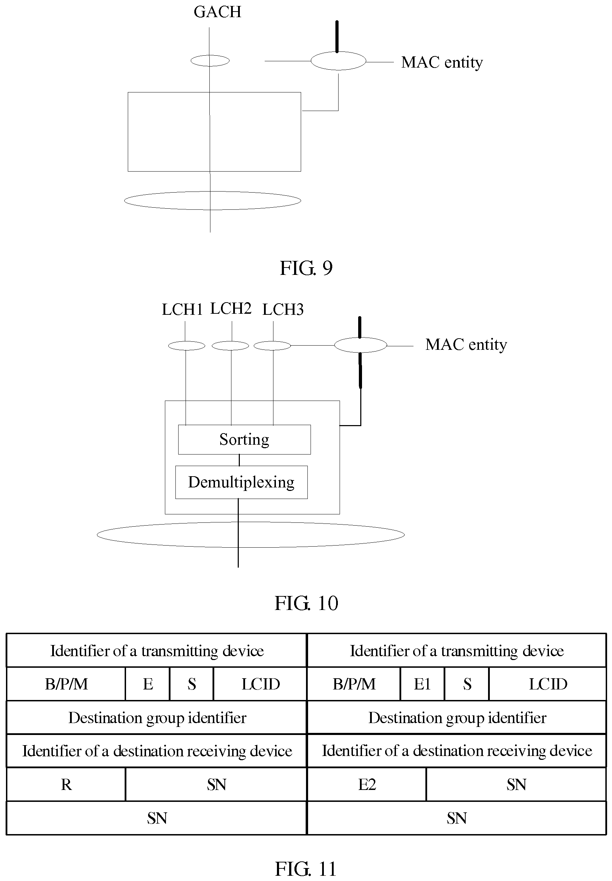

In addition, the receiving device may also join multiple wireless groups. When the receiving device serves as a group member node, the MAC entity further establishes a MAC-GA entity. Specifically, referring to FIG. 9, FIG. 9 is a schematic structural diagram of a MAC-GA entity in a data transmission method according to the present invention. The MAC-GA instance is corresponding to a GACH logical channel, and is used to receive "group announcement" information sent by a group head node. The GACH channel has a unique physical resource at a physical layer, and the unique physical resource is, for example, a resource independently in terms of frequency or a resource independently in terms of time. Even if a receive end node joins multiple wireless groups, because "group announcement" information of groups can be distinguished by using physical resources, that is, whether a piece of data is data of the GACH can be distinguished at the physical layer, the physical layer of the receiving device directly sends the data to a MAC-GA entity after receiving the data belonging to the GACH channel. Then, the MAC-GA adds no packet header to the data, but directly integrates the data into an RLC entity of a logical channel corresponding to the GACH.

In Embodiment 3 of the data transmission method according to the present invention, a MAC SDU is obtained, for example, by segmenting a radio link control layer protocol data unit RLC PDU of a transmitting device, and in this case, a segmentation bit, a serial number bit, or a concatenation bit is added in a packet header of a MAC PDU received by a receiving device. The segmentation bit indicates that the MAC SDU is obtained by segmenting the RLC PDU, the serial number bit indicates a location of the MAC SDU in the RLC PDU, and the concatenation bit indicates whether there is still another MAC SDU after the MAC SDU. A MAC-U entity established in the receiving device sorts, according to the serial number bit, MAC SDUs obtained by segmenting a same RLC PDU, and sends the sorted MAC SDUs to an RLC layer. In this process, a schematic structural diagram of the MAC-U is shown in FIG. 10, and FIG. 10 is another schematic structural diagram of a MAC-U in a data transmission method according to the present invention. The packet header of the MAC PDU is shown in FIG. 11, and FIG. 11 is a schematic format diagram of a packet header, to which a serial number bit is added, of a MAC PDU in a data transmission method according to the present invention. As shown in FIG. 11, S is a segmentation bit, indicating whether a current data packet is a segmented data packet; E or E1 is a packet header indicator bit, indicating whether there is a data packet header or a data packet after this bit.

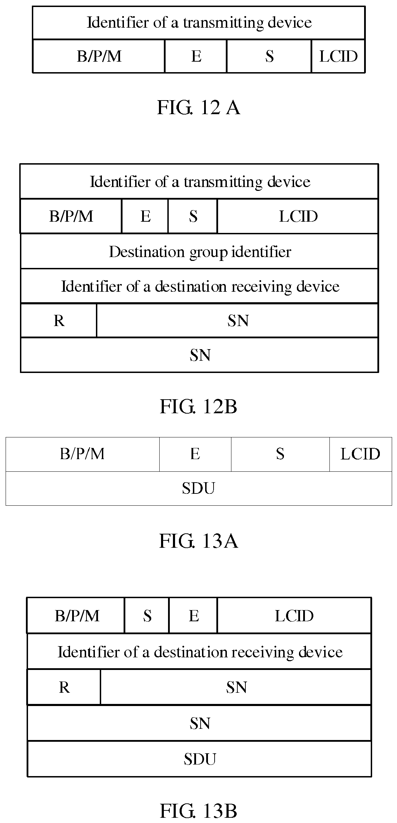

In a D2D communication process, a transmitting device may send data packets of multiple logical channels at a time, and in this case, packet headers of these data packets include a same identifier of the transmitting device, but include different transmission mode indicator bits and different logical channel identifiers. For clarity of description, the packet header is divided into two parts: An identifier of the transmitting device in each packet header is referred to as a common packet header, a part, except the identifier of the transmitting device, in each packet header is referred to as a sub-packet header, and sub-packet headers of multiple data packets are generally different. Specifically, referring to FIG. 12A and FIG. 12B, FIG. 12A is a schematic format diagram of a common packet header and a sub-packet header in a data transmission method according to the present invention, and FIG. 12B is a schematic format diagram of another common packet header and another sub-packet header in a data transmission method according to the present invention.

Referring to both FIG. 12A and FIG. 12B, it is assumed that packet header formats of two data packets sent by a transmitting device are respectively shown in FIG. 12A and FIG. 12B, and the two packet headers include a same identifier the transmitting device, that is, a common packet header, but include different sub-packet headers, that is, the second byte in FIG. 12A is different from the second byte to the sixth byte in FIG. 12B.

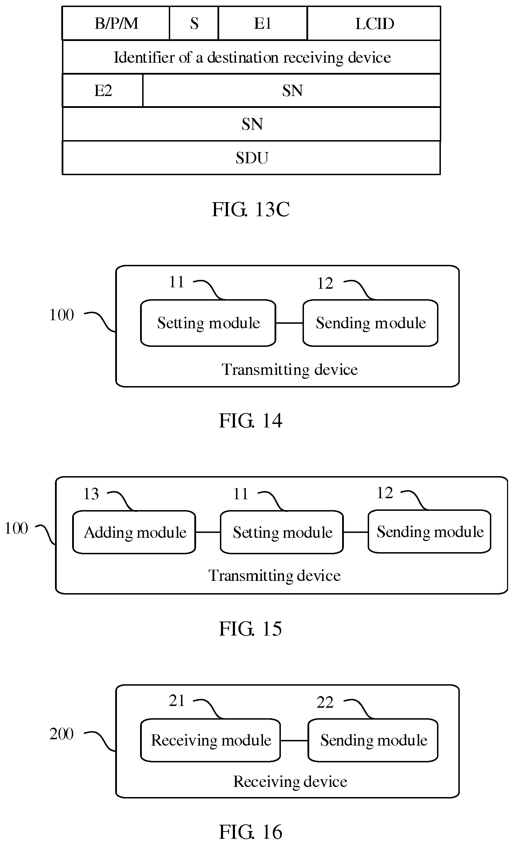

In the foregoing architecture shown in FIG. 6, for a received MAC PDU, if a distribution module of a receiving device determines that the MAC PDU is a data packet of the receiving device, the distribution module sends the received MAC PDU to a corresponding MAC-U, and the MAC-U demultiplexes the MAC PDU and sends the MAC SDU to a corresponding RLC entity according to a logical channel identifier; if the distribution module of the receiving device determines that the MAC PDU is not a data packet of the receiving device, the distribution module discards the data packet. However, the present invention is not limited thereto, and in another feasible implementation manner, the distribution module may first demultiplex each MAC PDU, determine, according to each sub-packet header of the MAC PDU, whether the distribution module is a correct receiver, and if yes, send each data packet to a MAC-U entity or otherwise, discard the data packet. In this case, a demultiplexing function of the MAC-U entity is canceled. In this process, a data packet obtained after the distribution module performs demultiplexing is shown in FIG. 13A to FIG. 13C. FIG. 13A is a schematic format diagram of a data packet obtained after a MAC PDU sent in a broadcast manner is demultiplexed in a data transmission method according to the present invention, FIG. 13B is a schematic format diagram of a data packet obtained after a MAC PDU sent in a unicast manner is demultiplexed in a data transmission method according to the present invention, and FIG. 13C is a schematic format diagram of a data packet obtained after a MAC PDU sent in a multicast manner is demultiplexed in a data transmission method according to the present invention.

In addition, in another possible implementation manner, the distribution module may send, only according to the identifier of the transmitting device, the MAC PDU to the MAC-U, and the MAC-U demultiplexes each MAC-PDU. Then, the MAC-U determines, according to a sub-packet header, whether the MAC-U is a correct receiver, and if yes, sends each data packet to the MAC-U entity, or otherwise, discards the data packet.

FIG. 14 is a schematic structural diagram of Embodiment 1 of a transmitting device according to the present invention. The transmitting device provided in this embodiment is an apparatus embodiment corresponding to the embodiment in FIG. 2 of the present invention. A specific implementation process is not described herein. Specifically, a transmitting device 100 provided in this embodiment specifically includes:
a setting module 11, configured to set a sending manner of a media access control layer service data unit MAC SDU according to a logical channel type of the MAC SDU; and
a sending module 12, configured to send, according to the sending manner that is set by the setting module 11, a media access control layer protocol data unit MAC PDU obtained from the MAC SDU.

The transmitting device provided in this embodiment of the present invention sets a sending manner of a MAC SDU according to a logical channel type of the MAC SDU and sends the MAC SDU according to the sending manner, so that a receiving device caches and processes the MAC SDU. If multiple transmitting devices simultaneously send MAC PDUs to the receiving device, the receiving device caches, to cache entities corresponding to the different transmitting devices, the MAC PDUs sent by the transmitting devices and processes the MAC PDUs. In this process, the receiving device can simultaneously process MAC SDUs sent by multiple transmitting devices, thereby improving data transmission reliability in D2D communication.

Optionally, in an embodiment of the present invention, the setting module 11 is specifically configured to: if the logical channel type of the MAC SDU is a broadcast type, add a broadcast mode indicator bit to a packet header of the MAC PDU, so as to set the sending manner of the MAC SDU to a broadcast sending manner.

Optionally, in an embodiment of the present invention, the setting module 11 is specifically configured to: if the logical channel type of the MAC SDU is a unicast type, add a unicast mode indicator bit, an identifier of the transmitting device, and a unicast destination address to a packet header of the MAC PDU, so as to set the sending manner of the MAC SDU to a unicast sending manner.

Optionally, in an embodiment of the present invention, the setting module 11 is specifically configured to: if the logical channel type of the MAC SDU is a multicast type, add a multicast mode indicator bit, an identifier of the transmitting device, and a multicast destination address to a packet header of the MAC PDU, so as to set the sending manner of the MAC SDU to a multicast sending manner.

FIG. 15 is a schematic structural diagram of Embodiment 2 of a transmitting device according to the present invention. As shown in FIG. 15, on the basis of the structure shown in FIG. 14, a transmitting device 100 in this embodiment further includes:
an adding module 13, configured to: if the MAC SDU is obtained by segmenting a radio link control layer protocol data unit RLC PDU of the transmitting device, add a segmentation bit, a serial number bit, or a concatenation bit to the packet header of the MAC PDU, where the segmentation bit indicates that the MAC SDU is obtained by segmenting the RLC PDU, the serial number bit indicates a location of the MAC SDU in the RLC PDU, and the concatenation bit indicates whether there is still another MAC SDU after the MAC SDU.

Optionally, in an embodiment of the present invention, the packet header of the MAC PDU further carries a logical channel identifier.

FIG. 16 is a schematic structural diagram of Embodiment 1 of a receiving device according to the present invention. The receiving device provided in this embodiment is an apparatus embodiment corresponding to the embodiment in FIG. 5 of the present invention. A specific implementation process is not described herein. Specifically, a receiving device 200 provided in this embodiment specifically includes:
a receiving module 21, configured to receive a media access control layer protocol data unit MAC PDU sent by a transmitting device, where the MAC PDU is sent in a sending manner that is set by the transmitting device according to a logical channel type of a media access control layer service data unit MAC SDU; and
a sending module 22, configured to: send the MAC PDU received by the receiving module 21 to a cache entity corresponding to the transmitting device, and then send the MAC SDU included in the MAC PDU in the cache entity to a radio link control RLC layer.

After receiving a MAC PDU sent in a sending manner that is set by a transmitting device according to a logical channel type of a MAC SDU, the receiving device provided in this embodiment of the present invention caches and processes the MAC PDU. If multiple transmitting devices simultaneously send MAC PDUs to the receiving device, the receiving device caches, to cache entities corresponding to the different transmitting devices, the MAC PDUs sent by the transmitting devices and processes the MAC PDUs. In this process, the receiving device can simultaneously process MAC PDUs sent by multiple transmitting devices, thereby improving data transmission reliability in D2D communication.

Optionally, in an embodiment of the present invention, the receiving module 21 is specifically configured to receive the MAC PDU that is sent by the transmitting device in a broadcast manner.

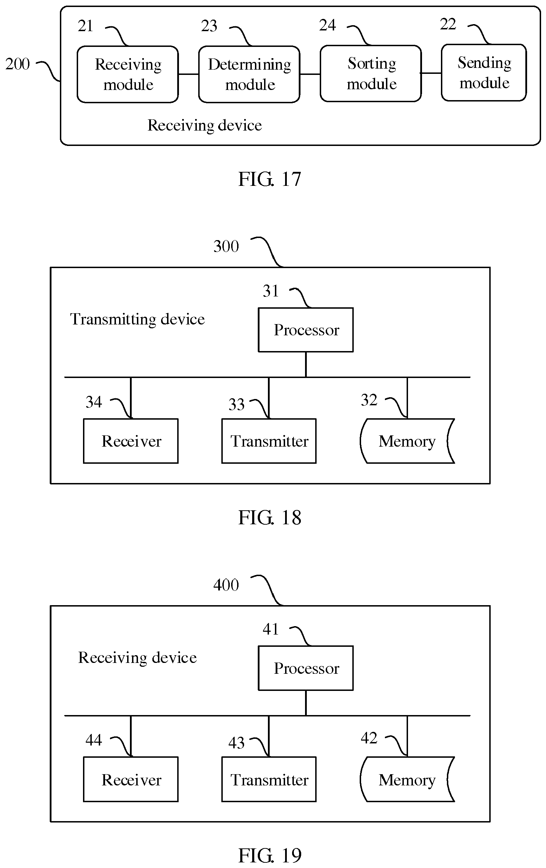

FIG. 17 is a schematic structural diagram of Embodiment 2 of a receiving device according to the present invention. As shown in FIG. 17, on the basis of the structure shown in FIG. 16, a receiving device 200 in this embodiment further includes: a determining module 23; the receiving module 21 is specifically configured to receive the MAC PDU sent by the transmitting device in a unicast sending manner, where a packet header of the MAC PDU carries a unicast mode indicator bit, an identifier of the transmitting device, and a unicast destination address; the determining module 23 is configured to determine whether the unicast destination address is consistent with an identifier of the receiving device; the sending module 22 is specifically configured to: if the determining module 23 determines the unicast destination address is consistent with the identifier of the receiving device, send the MAC SDU included in the MAC PDU to the RLC layer.

Optionally, in an embodiment of the present invention, the receiving module 21 is specifically configured to receive the MAC PDU sent by the transmitting device in a multicast sending manner, where a packet header of the MAC PDU carries a multicast mode indicator bit, an identifier of the transmitting device, and a multicast destination address; the determining module 23 is configured to determine whether the multicast destination address is consistent with a group identifier of the receiving device; the sending module 22 is specifically configured to: if the determining module 23 determines the multicast destination address is consistent with the group identifier of the receiving device, send, to the RLC layer, the MAC SDU corresponding to the MAC PDU.

Referring to FIG. 17, optionally, in an embodiment of the present invention, the receiving device further includes: a sorting module 24; the receiving module 21 is specifically configured to receive the MAC PDU, where a segmentation bit, serial number bit, or a concatenation bit is added to the packet header of the MAC PDU, the segmentation bit indicates that the MAC SDU is obtained by segmenting an RLC PDU, the serial number bit indicates a location of the MAC SDU in the RLC PDU, and the concatenation bit indicates whether there is still another MAC SDU after the MAC SDU; the sorting module 24 is configured to sort, according to the serial number bit, MAC SDUs that are obtained by segmenting a same RLC PDU and included in MAC PDUs; the sending module 22 is specifically configured to send the MAC SDUs sorted by the sorting module 24 to the RLC layer.

Optionally, in an embodiment of the present invention, the sending module 22 is specifically configured to send, according to a logical channel identifier carried in the packet header of the MAC PDU, the MAC SDU included in the MAC PDU to a logical channel that is corresponding to the logical channel identifier and that is at the RLC layer.

FIG. 18 is a schematic structural diagram of Embodiment 3 of a transmitting device according to the present invention. As shown in FIG. 18, a transmitting device 300 provided in this embodiment includes a processor 31 and a memory 32. The transmitting device 300 may further include a transmitter 33 and a receiver 34. The transmitter 33 and the receiver 34 may be connected to the processor 31. The transmitter 33 is configured to send data or information. The receiver 34 is configured to receive data or information. The memory 32 stores an execution instruction. When the transmitting device 300 runs, the processor 31 communicates with the memory 32, and the processor 31 invokes the execution instruction in the memory 32 to execute the method embodiment shown in FIG. 2. Implementation principles and technical effects thereof are similar, and details are not described herein.

FIG. 19 is a schematic structural diagram of Embodiment 3 of a receiving device according to the present invention. As shown in FIG. 19, a receiving device 400 provided in this embodiment includes a processor 41 and a memory 42. The receiving device 400 may further include a transmitter 43 and a receiver 44. The transmitter 43 and the receiver 44 may be connected to the processor 41. The transmitter 43 is configured to send data or information. The receiver 44 is configured to receive data or information. The memory 42 stores an execution instruction. When the receiving device 400 runs, the processor 41 communicates with the memory 42, and the processor 41 invokes the execution instruction in the memory 42 to execute the method embodiment shown in FIG. 5. Implementation principles and technical effects thereof are similar, and details are not described herein.

A person of ordinary skill in the art may understand that all or some of the steps of the method embodiments may be implemented by a program instructing relevant hardware. The program may be stored in a computer readable storage media. When the program runs, the steps of the method embodiments are performed. The foregoing storage media includes: any media that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A data transmission method, comprising:
setting, by a transmitting device, a sending manner of a media access control layer service data unit MAC SDU according to a logical channel type of the MAC SDU; and
sending, by the transmitting device according to the sending manner, a media access control layer protocol data unit MAC PDU obtained from the MAC SDU.

2. The method according to claim 1, wherein the setting, by a transmitting device, a sending manner of a MAC SDU according to a logical channel type of the MAC SDU comprises:
if the logical channel type of the MAC SDU is a broadcast type, adding a broadcast mode indicator bit to a packet header of the MAC PDU, so as to set the sending manner of the MAC SDU to a broadcast sending manner.

3. The method according to claim 1, wherein the setting, by a transmitting device, a sending manner of a MAC SDU according to a logical channel type of the MAC SDU comprises:
if the logical channel type of the MAC SDU is a unicast type, adding a unicast mode indicator bit, an identifier of the transmitting device, and a unicast destination address to a packet header of the MAC PDU, so as to set the sending manner of the MAC SDU to a unicast sending manner.

4. The method according to claim 1, wherein the setting, by a transmitting device, a sending manner of a MAC SDU according to a logical channel type of the MAC SDU comprises:
if the logical channel type of the MAC SDU is a multicast type, adding a multicast mode indicator bit, an identifier of the transmitting device, and a multicast destination address to a packet header of the MAC PDU, so as to set the sending manner of the MAC SDU to a multicast sending manner.

5. The method according to any one of claims 1 to 4, wherein if the MAC SDU is obtained by segmenting a radio link control layer protocol data unit RLC PDU of the transmitting device, the method further comprises:
adding, by the transmitting device, a segmentation bit, a serial number bit, or a concatenation bit to the packet header of the MAC PDU, wherein the segmentation bit indicates that the MAC SDU is obtained by segmenting the RLC PDU, the serial number bit indicates a location of the MAC SDU in the RLC PDU, and the concatenation bit indicates whether there is still another MAC SDU after the MAC SDU.

6. The method according to any one of claims 1 to 5, wherein the packet header of the MAC PDU further carries a logical channel identifier.

7. A data transmission method, comprising:
receiving, by a receiving device, a media access control layer protocol data unit MAC PDU sent by a transmitting device, wherein the MAC PDU is sent in a sending manner that is set by the transmitting device according to a logical channel type of a media access control layer service data unit MAC SDU;
sending, by the receiving device, the MAC PDU to a cache entity corresponding to the transmitting device; and
sending, by the receiving device, the MAC SDU comprised in the MAC PDU in the cache entity to a radio link control RLC layer.

8. The method according to claim 7, wherein the receiving, by a receiving device, a MAC PDU sent by a transmitting device comprises:
receiving, by the receiving device, the MAC PDU sent by the transmitting device in a broadcast sending manner.

9. The method according to claim 7, wherein the receiving, by a receiving device, a MAC PDU sent by a transmitting device comprises:
receiving, by the receiving device, the MAC PDU sent by the transmitting device in a unicast sending manner, wherein a packet header of the MAC PDU carries a unicast mode indicator bit, an identifier of the transmitting device, and a unicast destination address; and
the sending, by the receiving device, the MAC SDU comprised in the MAC PDU in the cache entity to an RLC layer comprises:
determining, by the receiving device, whether the unicast destination address is consistent with an identifier of the receiving device, and if the unicast destination address is consistent with the identifier of the receiving device, sending, to the RLC layer, the MAC SDU corresponding to the MAC PDU.

10. The method according to claim 7, wherein the receiving, by a receiving device, a MAC PDU sent by a transmitting device comprises:
receiving, by the receiving device, the MAC PDU sent by the transmitting device in a multicast sending manner, wherein a packet header of the MAC PDU carries a multicast mode indicator bit, an identifier of the transmitting device, and a multicast destination address; and
the sending, by the receiving device, the MAC SDU comprised in the MAC PDU in the cache entity to an RLC layer comprises:
determining, by the receiving device, whether the multicast destination address is consistent with a group identifier of the receiving device, and if the multicast destination address is consistent with the group identifier of the receiving device, sending, to the RLC layer, the MAC SDU corresponding to the MAC PDU.

11. The method according to any one of claims 7 to 10, wherein if the MAC PDU is obtained by segmenting a radio link control layer protocol data unit RLC PDU of the transmitting device, the receiving, by a receiving device, a MAC PDU sent by a transmitting device comprises:
receiving, by the receiving device, the MAC PDU, wherein a segmentation bit, a serial number bit, or a concatenation bit is added to the packet header of the MAC PDU, the segmentation bit indicates that the MAC SDU is obtained by segmenting the RLC PDU, the serial number bit indicates a location of the MAC SDU in the RLC PDU, and the concatenation bit indicates whether there is still another MAC SDU after the MAC SDU; and
before the sending, by the receiving device, the MAC SDU comprised in the MAC PDU in the cache entity to an RLC layer, the method comprises:
sorting, by the receiving device according to the serial number bit, MAC SDUs that are obtained by segmenting a same RLC PDU and comprised in MAC PDUs, and sending the sorted MAC SDUs to the RLC layer.

12. The method according to any one of claims 7 to 11, wherein the sending, by the receiving device, the MAC SDU comprised in the MAC PDU in the cache entity to an RLC layer comprises:
sending, by the receiving device according to a logical channel identifier carried in the packet header of the MAC PDU, the MAC SDU comprised in the MAC PDU to a logical channel that is corresponding to the logical channel identifier and that is at the RLC layer.

13. A transmitting device, comprising:
a setting module, configured to set a sending manner of a media access control layer service data unit MAC SDU according to a logical channel type of the MAC SDU; and
a sending module, configured to send, according to the sending manner that is set by the setting module, a media access control layer protocol data unit MAC PDU obtained from the MAC SDU.

14. The transmitting device according to claim 13, wherein:
the setting module is specifically configured to: if the logical channel type of the MAC SDU is a broadcast type, add a broadcast mode indicator bit to a packet header of the MAC PDU, so as to set the sending manner of the MAC SDU to a broadcast sending manner.

15. The transmitting device according to claim 13, wherein:
the setting module is specifically configured to: if the logical channel type of the MAC SDU is a unicast type, add a unicast mode indicator bit, an identifier of the transmitting device, and a unicast destination address to a packet header of the MAC PDU, so as to set the sending manner of the MAC SDU to a unicast sending manner.

16. The transmitting device according to claim 13, wherein:
the setting module is specifically configured to: if the logical channel type of the MAC SDU is a multicast type, add a multicast mode indicator bit, an identifier of the transmitting device, and a multicast destination address to a packet header of the MAC PDU, so as to set the sending manner of the MAC SDU to a multicast sending manner.

17. The transmitting device according to any one of claims 13 to 16, further comprising:
an adding module, configured to: if the MAC SDU is obtained by segmenting a radio link control layer protocol data unit RLC PDU of the transmitting device, add a segmentation bit, a serial number bit, or a concatenation bit to the packet header of the MAC PDU, wherein the segmentation bit indicates that the MAC SDU is obtained by segmenting the RLC PDU, the serial number bit indicates a location of the MAC SDU in the RLC PDU, and the concatenation bit indicates whether there is still another MAC SDU after the MAC SDU.

18. The transmitting device according to any one of claims 13 to 17, wherein the packet header of the MAC PDU further carries a logical channel identifier.

19. A receiving device, comprising:
a receiving module, configured to receive a media access control layer protocol data unit MAC PDU sent by a transmitting device, wherein the MAC PDU is sent in a sending manner that is set by the transmitting device according to a logical channel type of a media access control layer service data unit MAC SDU;
a sending module, configured to: send the MAC PDU received by the receiving module to a cache entity corresponding to the transmitting device, and then send the MAC SDU comprised in the MAC PDU in the cache entity to a radio link control RLC layer.

20. The receiving device according to claim 19, wherein:
the receiving module is specifically configured to receive the MAC PDU sent by the transmitting device in a broadcast sending manner.

21. The receiving device according to claim 19, further comprising: a determining module; wherein:
the receiving module is specifically configured to receive the MAC PDU sent by the transmitting device in a unicast sending manner, wherein a packet header of the MAC PDU carries a unicast mode indicator bit, an identifier of the transmitting device, and a unicast destination address;
the determining module is configured to determine whether the unicast destination address is consistent with an identifier of the receiving device; and
the sending module is specifically configured to: if the determining module determines that the unicast destination address is consistent with the identifier of the receiving device, send the MAC SDU comprised in the MAC PDU to the RLC layer.

22. The receiving device according to claim 19, further comprising: a determining module; wherein:
the receiving module is specifically configured to receive the MAC PDU sent by the transmitting device in a multicast sending manner, wherein a packet header of the MAC PDU carries a multicast mode indicator bit, an identifier of the transmitting device, and a multicast destination address;
the determining module is configured to determine whether the multicast destination address is consistent with a group identifier of the receiving device; and
the sending module is specifically configured to: if the determining module determines that the multicast destination address is consistent with the group identifier of the receiving device, send the MAC SDU comprised in the MAC PDU to the RLC layer.

23. The receiving device according to any one of claims 19 to 22, further comprising: a sorting module; wherein:
the receiving module is specifically configured to receive the MAC PDU, wherein a segmentation bit, serial number bit, or a concatenation bit is added to the packet header of the MAC PDU, the segmentation bit indicates that the MAC SDU is obtained by segmenting an RLC PDU, the serial number bit indicates a location of the MAC SDU in the RLC PDU, and the concatenation bit indicates whether there is still another MAC SDU after the MAC SDU;
the sorting module is configured to sort, according to the serial number bit, MAC SDUs that are obtained by segmenting a same RLC PDU and comprised in MAC PDUs; and
the sending module is specifically configured to send the MAC SDUs sorted by the sorting module to the RLC layer.

24. The receiving device according to any one of claims 19 to 23, wherein:
the sending module is specifically configured to send, according to a logical channel identifier carried in the packet header of the MAC PDU, the MAC SDU comprised in the MAC PDU to a logical channel that is corresponding to the logical channel identifier and that is at the RLC layer.

25. A transmitting device, comprising a processor and a memory, wherein the memory stores an execution instruction, and when the transmitting device runs, the processor communicates with the memory, and the processor executes the execution instruction to enable the transmitting device to perform the method according to any one of claims 1 to 6.

26. A receiving device, comprising a processor and a memory, wherein the memory stores an execution instruction, and when the receiving device runs, the processor communicates with the memory, and the processor executes the execution instruction to enable the receiving device to perform the method according to any one of claims 7 to 12.
